# EUROPÄISCHE PATENTSCHRIFT

(11) **EP 3 523 166 B1**
(45) Veröffentlichungstag und Bekanntmachung des Hinweises auf die Patenterteilung: **18.11.2020**
(21) Anmeldenummer: 17771744.4
(22) Anmeldetag: 20.09.2017
(51) Int. Cl.: B60T 8/36, F16K 31/06

(54) **MAGNETVENTIL MIT EINSTELLBARER FEDERKRAFT**
SOLENOID VALVE HAVING ADJUSTABLE SPRING FORCE
ÉLECTROVANNE À FORCE ÉLASTIQUE RÉGLABLE

(30) Priorität: 10.10.2016 DE 102016219580
(43) Veröffentlichungstag der Anmeldung: 14.08.2019
(73) Patentinhaber: Robert Bosch GmbH, 70442 Stuttgart (DE)
(72) Erfinder: DINERMAN, Michael, 74072 Heilbronn (DE); REICHERT, Michael, 74336 Brackenheim (DE); HAEUSSER, Bernd, 74382 Neckarwestheim (DE)
(86) Internationale Anmeldenummer: PCT/EP2017/073706
(87) Internationale Veröffentlichungsnummer: WO 2018/069007

(56) Entgegenhaltungen:
- WO-A1-2011/079986
- DE-A1-102009 055 232

## Beschreibung

Die vorliegende Erfindung betrifft ein Magnetventil, insbesondere zur Steuerung eines Bremsdrucks einer Radbremse eines Kraftfahrzeugs, mit einem axial verschiebbar gelagerten Anker, wobei ein Ende des Ankers einem Polkern zugeordnet ist und an einem anderen Ende des Ankers ein Ventildichtelement angeordnet ist, wobei der Anker einen Axialdurchgang aufweist, wobei ein Verschlusselement in wählbarer Position kraft- und/oder formschlüssig in dem Axialdurchgang gehalten wird, und in dem Axialdurchgang ein Stößel axial verschiebbar gelagert ist, der in Einbaulage eine Verbindung mit dem Polkern darstellt, wobei in dem Axialdurchgang eine Druckfeder positioniert ist, wobei die Druckfeder zwischen dem Stößel und dem Verschlusselement vorgespannt gehalten wird, wobei das Magnetventil dadurch gekennzeichnet ist, dass das Verschlusselement als dreidimensional konvexer Körper ausgebildet ist.

### Stand der Technik

Magnetventile, Anker sowie Verfahren zur Herstellung der gattungsgemäßen Art sind aus dem Stand der Technik bekannt. Insbesondere bei Bremssystemen von Kraftfahrzeugen werden Magnetventile dazu verwendet, den Druckaufbau in einem Hydrauliksystem zu steuern beziehungsweise zu regeln. Häufig werden dazu sogenannte stromlos geschlossene Ventile genutzt, die sich dadurch auszeichnen, dass wenn die Magnet-Aktorik nicht bestromt wird, sich das Magnetventil in seinem geschlossenen Zustand befindet. Die Magnet-Aktorik wirkt dabei auf einen in einem Gehäuse axial verschiebbar gelagerten Anker, an dessen einem Ende ein Ventildichtkörper angeordnet ist, der mit einem entsprechenden Ventilsitz zum Verschließen oder Freigeben einer Durchströmungsöffnung zusammenwirkt. Dem anderen Ende des Ankers ist ein Polkern der Magnet-Aktorik zugeordnet, der bei Anlegen einer Spannung ein magnetisches Feld auf den Anker ausübt, um diesen axial zu verlagern. Die Toleranzkette über mehrere Einzelteile des Magnetventils erhöht die Streuung der Federvorspannkraft. Miniaturisierung der Magnetventile und höhere Anforderungen an die Regelsysteme erfordern immer höhere Genauigkeiten der Öffnungsdrücke. Die Kraft einer Schraubenfeder ist z.B. von den Fertigungstoleranzen der Drahtstärke, des Windens und der Materialeigenschaften des Drahtes abhängig. Durch eine Korrektur kann die Streuung der Federkraft reduziert werden.

Aus dem Stand der Technik ist beispielsweise die Patentanmeldung DE 10 2009 055 232 A1 bekannt. Diese Schrift betrifft ein Magnetventil, wobei die Druckfeder in einem Axialdurchgang des Ankers zwischen einem in dem Axialdurchgang in wählbarer Position kraft- und/oder formschlüssig gehaltenen, den Ventildichtkörper aufweisenden Bolzen und einem bis zu einem Anschlag aus dem Axialdurchgang herausschiebbar angeordneten, den Polkern mit der Vorspannkraft beaufschlagenden Druckstück vorgespannt gehalten ist. Der Anker weist also einen Axialdurchgang auf, der sich kanalartig durch den gesamten Anker axial erstreckt. In diesem Axialdurchgang liegt die Druckfeder ein und ist zwischen dem Bolzen und dem Druckstück vorgespannt gehalten. Der Bolzen weist den Ventildichtkörper auf, wobei der Ventildichtkörper auf der dem Anker abgewandten Seite des Bolzens an dem Bolzen angeordnet ist, um mit dem Dichtsitz des Magnetventils zusammenwirken zu können. Der Bolzen ist in wählbarer Position kraft- und/oder formschlüssig in dem Axialdurchgang gehalten. Das bedeutet, dass der Bolzen in unterschiedlichen Axial-Positionen in dem Axialdurchgang haltbar beziehungsweise befestigbar ist. Bei der Montage des Magnetventils ist es nunmehr möglich, die Vorspannkraft der Druckfeder einzustellen. Durch Verschieben des Bolzens in den Axialdurchgang hinein wird die Druckfeder gegen das Druckstück verspannt, das bei der Montage noch nicht von dem Polkern beaufschlagt wird, sondern an dem Anschlag des Ankers anliegt. Dadurch ist der Federraum definiert und die Vorspannkraft kann beispielsweise in Abhängigkeit von dem Verschiebeweg des Bolzens berechnet werden. Das Einfügen des Bolzens ist jedoch relativ aufwendig und kostenintensiv, bspw. ist eine gerichtete Montage notwendig, weiterhin kann es bei der Montage des Bolzens in den Axialdurchgang zu einem Verkanten des Bolzens kommen.

### Offenbarung der Erfindung

Vorteilhaft ermöglicht hingegen das erfindungsgemäße Magnetventil eine Ermöglichung einer einstellbaren Federkraft bei einer einfachen Montage. Ermöglicht wird dies gemäß der Erfindung durch die Merkmale der unabhängigen Patentansprüche. Weiterbildungen der Erfindung sind in den abhängigen Patentansprüchen angegeben.

Das erfindungsgemäße Magnetventil, insbesondere zur Steuerung eines Bremsdrucks einer Radbremse eines Kraftfahrzeugs, mit einem axial verschiebbar gelagerten Anker, wobei ein Ende des Ankers einem Polkern zugeordnet ist und an einem anderen Ende des Ankers ein Ventildichtelement angeordnet ist, wobei der Anker einen Axialdurchgang aufweist, wobei ein Verschlusselement in wählbarer Position kraft- und/oder formschlüssig in dem Axialdurchgang gehalten wird, und in dem Axialdurchgang ein Stößel axial verschiebbar gelagert ist, der in Einbaulage eine Verbindung mit dem Polkern darstellt, wobei in dem Axialdurchgang eine Druckfeder positioniert ist, wobei die Druckfeder zwischen dem Stößel und dem Verschlusselement vorgespannte gehalten wird, ist dadurch gekennzeichnet, dass das Verschlusselement als dreidimensional konvexer Körper ausgebildet ist.

Hierunter wird verstanden, dass aufgrund der gewählten und eingestellten Position des Verschlusselementes eine Einstellung der Federkraft erfolgt, insbesondere eine Einstellung der wirkenden Vorspannung der Druckfeder. Durch diese Einstellung kann eine Korrektur von bspw. der Fertigungstoleranzen der Drahtstärke, des Windens und der Materialeigenschaften des Drahtes erfolgen. Durch die Korrektur kann eine Streuung der Federkraft reduziert werden. Der Begriff wählbare Positionierung im Axialdurchgang ist so zu verstehen, dass der Durchmesser des Verschlusselementes und der Durchmesser des Axialdurchgangs an der gewünschten Position entsprechend aufeinander abzustimmen sind. Insbesondere ist denkbar, dass der Axialdurchgang unterschiedliche Durchmesser über seine Länge aufweist. Bspw. kann ein radial ausgerichteter Vorsprung (auch Einwölbung oder Verjüngung des Axialdurchgangs) nach innen an dem Ende des Ankers (unteres Ende) ausgebildet sein, welches dem Ventildichtsitz zugewandt ist. Durch diesen Vorsprung reduziert sich der Durchmesser des Axialdurchgangs entsprechend. Als dreidimensional konvexer Körper ist weiterhin ein Körper zu verstehen, der konvex in alle drei geometrischen Dimensionen ist. Ein solcher Körper besitzt weiterhin keine größeren ebenen Flächen. Insbesondere ist keine ebene Fläche an einer Stirnseite des Körpers ausgebildet, wie bspw. bei einem Zylinder. Ein Beispiel eines solchen dreidimensional konvexen Körpers ist eine Kugel.

Durch einen derartig geformten Körper ist eine genaue Einstellung der gewünschten Federkraft möglich. Das heißt, die übrigen Bauteile können mit größeren Toleranzen hergestellt werden, wodurch diese günstiger werden. Beispielsweise können auch präzise Drehteile durch kostengünstige Kunststoffspritzgießteile ersetzt werden. Eine derart präzise Federkrafteinstellung ermöglicht weiterhin eine präzise Funktion des Elektro-Magnetventils. Hierbei ist auch eine separate Montage als geschlossene Anker-Baugruppe möglich.

Vorteilhaft kann ein dreidimensional konvexer Körper weiterhin leicht in den Axialdurchgang eingebracht werden. Hierbei wird ein mögliches Verkippen, Verkanten, Verhaken bei der Montage - im Vergleich zu anderen Körpern - nahezu ausgeschlossen. Die Montage des Ankers ist dadurch einfacher und hat einen geringeren Zeitaufwand. Ein derartiger Körper besitzt jedoch eine geringe Haftreibfläche wenn er in den Axialdurchgang in einer freien Positionierung eingebracht wird. Es wurde erkannt, dass bei einer entsprechenden Abstimmung von Axialdurchgang und dreidimensional konvexem Verschlusselement auch eine freie und über die Lebensdauer fixierte Positionierung im Axialdurchgang ermöglicht werden kann. Hierdurch ergibt sich eine kostengünstige Lösung, um die gewünschte Federkraft variabel einzustellen.

In einer vorteilhaften Ausführung ist das Magnetventil dadurch gekennzeichnet, dass der dreidimensional konvexe Körper runde Formen aufweist.

Hierunter ist zu verstehen, dass das Verschlusselement im Wesentlichen keine Ecken oder Kanten aufweist. Vorteilhaft kann hierdurch ein Verhaken oder Verkanten bei der Montage vermieden werden.

In einer möglichen Ausgestaltung ist das Magnetventil dadurch gekennzeichnet, dass der dreidimensional konvexe Körper in den Axialdurchgang eingepresst ist.

Hierunter wird verstanden, dass der Durchmesser des Axialdurchgangs und der Durchmesser des Verschlusselements entsprechend aufeinander abgestimmt sind. Dies gilt insbesondere auch bei einem gestuften Axialdurchgang. Hierbei ist sowohl die gewünschte Endposition des eingepressten Verschlusselements bei der Auslegung des Axialdurchgangs (als auch des Verschlusselements) zu berücksichtigen, als auch den Verfahrweg des Verschlusselements beim Einpressen. Das Verschlusselement ist insbesondere an dem Ende des Ankers in den Axialdurchgang eingepresst, welches dem Dichtsitz zugewandt ist. Wie bereits ausgeführt, kann dieses Ende einen Vorsprung radial nach innen aufweisen, wobei das Verschlusselement in dem verbleibenden Axialdurchgang eingepresst ist. Der Vorsprung kann dabei eine definierte axiale Länge aufweisen, um einen ausreichende Positionierung des Verschlusselementes beim Einpressen zu ermöglichen. Vorteilhaft kann damit eine freie axiale Positionierung des Verschlusselementes erzielt werden, wenn diese durch die Einpressung an die gewählte Stelle eingepresst und dort dauerhaft gehalten wird.

In einer bevorzugten Ausführung ist das Magnetventil dadurch gekennzeichnet, dass der dreidimensional konvexe Körper vollumfänglich an dem Axialdurchgang anliegt.

Hierunter wird verstanden, dass keine Hohlräume zwischen dem Axialdurchgang und dem Verschlusselement in montierter Position bestehen. Es sind also keine Unterbrechungen wie bspw. Nuten zwischen den Körpern vorgesehen. Vorteilhaft kann hierdurch eine optimale Kraftübertragung ermöglicht werden. Hierdurch kann bspw. die Flächenpressung erhöht werden. Dies ermöglicht bspw. einen dauerhaften Kraftschluss über die Lebensdauer. Ebenfalls kann dadurch eine Vermeidung einer Schwächung des Materials und ungewünschte Verformung oder ungewünschte Relaxation vermieden werden.

In einer alternativen Weiterbildung ist das Magnetventil dadurch gekennzeichnet, dass der dreidimensional konvexe Körper einen ovaler Längsschnitt aufweist, insbesondere dass der dreidimensional konvexe Körper als ein Ovoid ausgebildet ist.

Hierunter wird verstanden, dass das Verschlusselement eine eiförmige Ausgestaltung aufweist. Beispielsweise kann dieses einen ovalen Längsschnitt besitzen. Vorteilhafterweise ist es weiterhin rotationssymmetrisch ausgebildet. Eine solche Formgebung erleichtert und vereinfacht das Einfügen des Verschlusselements in den Axialdurchgang. Weiterhin wird ein Verkanten bei der Montage vermieden.

In einer vorteilhaften Ausgestaltung ist das Magnetventil dadurch gekennzeichnet, dass der dreidimensional konvexe Körper als ein Ellipsoid ausgebildet ist, insbesondere als ein Rotationsellipsoid ausgebildet ist.

Vorteilhaft ergeben sich durch eine derartige Form des Verschlusselements ebenfalls ein einfaches Einfügen und ein vermiedenes Verhaken bei der Montage. In einer alternativen Ausführung kann das Verschlusselement in beliebig anderer runden Form ausgestaltet sein.

In einer möglichen Ausführung ist das Magnetventil dadurch gekennzeichnet dass, der dreidimensional konvexe Körper als Kugel ausgebildet ist.

Eine Kugel kann als spezielle Ausführung eines dreidimensional konvexen Körpers verstanden werden, welcher eine Rotationssymmetrie aufweist und bei welchem alle Radien gleich lang sind. Vorteilhaft kann hierdurch eine gerichtete Montage entbehrlich werden. Ebenfalls wird ein Verkippen oder Verkanten des Verschlusselements bei der Einführung in den Axialdurchgang vermieden. Weiterhin ist eine Kugel ein Standardbauteil. Es bedarf damit keiner Spezialanfertigung für den konvexen Körper.

In einer bevorzugten Weiterbildung ist das Magnetventil dadurch gekennzeichnet, dass der Anker an seiner Mantelaußenfläche mindestens eine Längsnut aufweist.

Hierunter wird verstanden, dass der Anker Nuten aufweist, die in axialer Richtung wenigstens über einen Teilbereich der Außenfläche verlaufen. Hierdurch wird ein Fluidausgleich zwischen einem Ventilraum unterhalb des Ankers und einem Arbeitsraum oberhalb des Ankers bei einer Bewegung des Ankers ermöglicht. Der Ventilraum wird bspw. durch den Ventilkörper und den Anker definiert. Der Arbeitsraum wird bspw. durch den Pokern, das Ventilgehäuse und den Anker definiert. Durch die Nuten kann bei einer Bewegung des Ankers ein einfacher Ausgleich von Fluid stattfinden. Hierdurch erfolgt eine Vermeidung von Kräften, die bspw. durch ein eingesperrtes Fluid einer gewünschten Ankerbewegung entgegen wirken. Dadurch wird ein ungewünschter Strömungswiderstand vermieden. Dies ist insbesondere dann vorteilhaft, wenn der Axialdurchgang in der Mitte des Ankers durch das Verschlusselement dicht verschlossen ist.

In einer alternativen Ausführungsform ist das Magnetventil dadurch gekennzeichnet, dass eine Hülse im Axialdurchgang des Ankers angeordnet ist zur Fixierung und/oder zur Führung des Stößels.

Hierunter wird verstanden, dass eine Hülse vorgesehen ist. Diese Hülse ist im Innenraum Axialdurchgang des Ankers positioniert und insbesondere eingepresst. Die Hülse kann dabei unterstützen den Stößel bei einer vormontierten Ankergruppe zu fixieren, da dieser einen Vordruck der Druckfeder halten muss. Die Hülse kann hierfür einen Anschlag für den Stößel bilden, so dass dieser nicht aus dem Axialdurchgang herausgeschoben wird, sondern den eingestellten Vordruck halten kann. Hierdurch kann vorteilhaft eine separat handhabbare Unterbaugruppe für den Anker gebildet werden. Hierdurch wird die Montage der Unterbaugruppe erleichtert, indem der Stößel mit der eingepressten Hülse im Anker fixiert ist.

Weiterhin kann die Hülse eine Führung für den Stößel ermöglichen und diesen bei einer Bewegung führen. Weiterhin ist vorgesehen, dass zwischen der Hülse und dem Stößel ein Spalt ausgebildet ist, der in axialer Richtung wenigstens über einen Teilbereich der Innenfläche verlaufen. Hierdurch wird ein Fluidausgleich zwischen einem Arbeitsraum oberhalb des Ankers und einem durch das Verschlusselement abgegrenzten Innenraum des Axialdurchgangs bei einer Bewegung des Ankers ermöglicht. Vorteilhaft ermöglicht ein derartiger Spalt einen leichten Austausches von Fluid bei einer Bewegung des Ankers. Hierdurch werden Kräften vermieden, die bspw. durch ein eingesperrtes Fluid einer gewünschten Ankerbewegung entgegen wirken. Der Spalt kann als Radialspiel vollumfänglich ausgebildet sein. Weiterhin kann der Spalt über die Gesamtlänge der Hülse ausgebildet sein.

In einer vorteilhaften Ausgestaltung ist das Magnetventil dadurch gekennzeichnet, dass der dreidimensional konvexe Körper das Verschlusselement und das Ventildichtelement ausbildet.

Hierunter wird verstanden, dass sowohl das Verschlusselement als auch das Ventildichtelement durch den konvexen Körper gebildet werden. Die Komponenten Verschlusselement und Ventildichtelement sind einstückig ausgebildet. Der dreidimensional konvexe Körper übernimmt damit sowohl die Funktion des Verschlusselementes (Anlagestelle Druckfeder und Einstellung Vorspannung) sowie die Funktion des Ventildichtelements (Abdichtung des Ventildichtsitzes in geschlossener Ventilposition). Vorteilhaft erfolgt dadurch eine Funktionsintegration in den dreidimensional konvexen Körper. Dies ermöglicht weniger Bauteile, eine geringere Komplexität und weniger Kosten.

Weiterhin ist ein Anker vorgesehen. Der erfindungsgemäße Anker für ein Magnetventil, insbesondere zur Steuerung eines Bremsdrucks einer Radbremse eines Kraftfahrzeugs, wobei der Anker axial verschiebbar im Magnetventil lagerbar ist, wobei ein Ende des Ankers einem Polkern zugeordnet ist und an einem anderen Ende des Ankers ein Ventildichtelement angeordnet ist, wobei der Anker einen Axialdurchgang aufweist, wobei ein Verschlusselement in wählbarer Position kraft- und/oder formschlüssig in dem Axialdurchgang gehalten wird, und in dem Axialdurchgang ein Stößel axial verschiebbar gelagert ist, der in Einbaulage eine Verbindung mit dem Polkern darstellt, wobei in dem Axialdurchgang eine Druckfeder positioniert ist, wobei die Druckfeder zwischen dem Stößel und dem Verschlusselement vorgespannte gehalten wird, ist dadurch gekennzeichnet, dass das Verschlusselement als dreidimensional konvexer Körper ausgebildet ist.

Vorteilhaft ist weiterhin ein Anker für ein Magnetventil gemäß einer der Ausführungen der obigen Beschreibung vorgesehen.

Erfindungsgemäß ist weiterhin ein Verfahren zur Herstellung eines Ankers für ein Magnetventil. Erfindungsgemäß wird bei dem Verfahren zuerst eine Hülse und anschließend der Stößel und anschließend die Druckfeder in den Axialdurchgang eingebracht, wobei das Verschlusselement derart weit in den Axialdurchgang eingebracht wird, bis die zwischen dem Verschlusselement und dem Stößel verspannte Druckfeder eine gewünschte Vorspannkraft erreicht, wobei die Vorspannkraft der Druckfeder durch Beaufschlagen des Stößels mit einer bestimmten Gegenkraft ermittelt wird.

Vorteilhaft ist weiterhin ein Verfahren zur Herstellung eines Ankers für ein Magnetventil gemäß einer der Ausführungen der obigen Beschreibung vorgesehen.

### Ausführungsformen

Es ist darauf hinzuweisen, dass die in der Beschreibung einzeln aufgeführten Merkmale in beliebiger, technisch sinnvoller Weise miteinander kombiniert werden können und weitere Ausgestaltungen der Erfindung aufzeigen. Weitere Merkmale und Zweckmäßigkeit der Erfindung ergeben sich aus der Beschreibung von Ausführungsbeispielen anhand der beigefügten Figuren.

Von den Figuren zeigt:

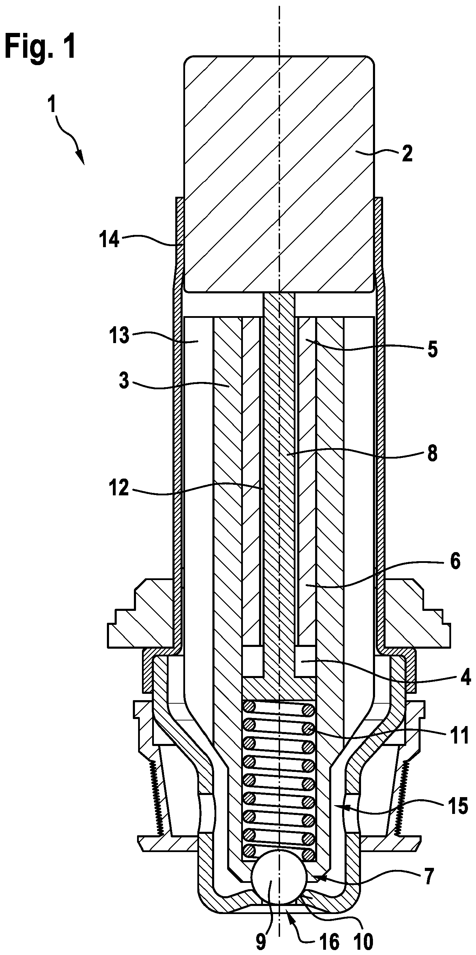

- Fig. 1: einen Ausschnitt einer schematische Schnittansicht eines Magnetventils entsprechend einer erfindungsgemäßen Ausführung.

Figur 1 zeigt in einer Längsschnittdarstellung ein Magnetventil 1 für ein Bremssystem eines Kraftfahrzeugs. Das Magnetventil 1 umfasst ein Gehäuse 14, das als zylinderförmige Hülse ausgebildet ist und in dem ein - ebenfalls zylinderförmiger - Anker 3 längsverschiebbar, beziehungsweise axial verlagerbar, angeordnet ist. Einem oberen Ende des Ankers 3 ist ein zu dem Anker 3 in Reihe geschalteter beziehungsweise angeordneter Polkern 2 zugeordnet, der in dem Gehäuse 14 beispielsweise mittels einer Schweißverbindung arretiert ist. Dem gegenüberliegenden unteren Ende des Ankers 3 ist ein von dem Gehäuse 14 gehaltener Ventilkörper 15 zugeordnet, der eine Durchströmungsöffnung 16 aufweist. Weiterhin ist der Ventilkörper 15 mit einem Dichtsitz 10 versehen.

Der Anker 3 weist eine als Axialdurchgang 4 ausgebildete Axialaufnahme auf, die sich zentral durch den Anker 3 erstreckt. Zu dem unteren Ende des Ankers 3 hin ist der Axialdurchgang 4 derart verjüngt ausgebildet, dass er einen radial einwärts ragenden Vorsprung 7 aufweist. In diesen Vorsprung 7 ist ein dreidimensional konvexer Körper 9 eingepresst. Durch die axiale Länge des Vorsprungs 7 ist die Positionierbarkeit des Körpers 9 im Anker 3 definiert. Der Körper 9 ist als Verschlusselement des Axialdurchgangs 4 sowie als Ventildichtelement ausgestaltet, so dass dieser in einer definierten Position des Magnetventils 1 dichtend mit dem Ventilsitz 10 zusammenwirkt, um die Durchströmungsöffnung 16 zu verschließen. Der Außendurchmesser des Körpers 9 und der Innendurchmesser des Axialdurchgangs 4, bzw. der Innendurchmesser des Vorsprungs 7 sind derart gewählt, dass eine Presspassung gebildet wird, sodass der Körper 9 bei der Montage des Ankers 3 in den Axialdurchgang 4 bis zu einer gewünschten Position axial eingepresst wird. Dort wird der Körper 9 dann kraftschlüssig durch den Pressverband an dem Anker 3 gehalten.

In dem Axialdurchgang 4 des Ankers 3 ist weiterhin ein längsverschiebbarer Stößel 8 (auch Druckstück genannt) positioniert, jedoch beabstandet von dem Verschlusselement 9. Der Stößel 8 weist einen im Wesentlichen zylinderförmigen Grundkörper auf. Der Stößel 8 erstreckt sich durch das obere Ende des Ankers 3 in Richtung des Polkerns 2 und liegt im eingebauten Zustand an diesem an.

Zwischen dem Körper 9 und dem Stößel 8 ist in dem Axialdurchgang 4 weiterhin eine Druckfeder 11 angeordnet, die vorliegend als Schraubenfeder ausgebildet und zwischen dem Verschlusselement 9 und dem Stößel 8 verspannt ist. Die Druckfeder 11 liegt direkt auf dem Körper 9 auf. In Abhängigkeit von der Positionierung des Körpers 9 ist daher die Anlageposition der Druckfeder 11 im unteren Bereich des Ankers 3 definiert. Der Stößel 8 und der Körper 9 wirken derart zusammen, dass die zwischen dem Stößel 8 und dem Körper 9 positionierte Druckfeder 11 mit einer Kraft beaufschlagt wird.

In den Axialdurchgang 4 ist weiterhin eine Hülse 5 eingebracht, insbesondere eingepresst. Die Hülse 5 bietet eine Führung für einen Stößel 8. Das obere Ende der Hülse 5 ist bündig mit dem oberen Ende des Ankers 3 ausgebildet. Weiterhin bildet das untere Ende der Hülse 5 einen axialen Anschlag 6 für den Stößel 8. Zwischen der Hülse 5 und dem Stößel 8 ist ein Spalt 12 ausgebildet. Dieser Spalt 12 ermöglicht zum einen ein gewisses Radialspiel, sowie zum anderen ein Entweichen (bzw. Nachströmen) des Fluides im Axialdurchgang 4, wenn der Ankers 3 im Magnetventil 1 bewegt wird. Weiterhin weist der Anker 3 Nuten 13 auf, um einen Fluidausgleich bei einer Bewegung des Ankers 3 in der Ankerhülse 5 zu ermöglichen.

Bevorzugt wird der dreidimensional konvexe Körper 9 jedoch iterativ beziehungsweise stückchenweise immer weiter in den Axialdurchgang 4 eingeschoben, bis die gewünschte Vorspannkraft erreicht ist, wobei die Vorspannkraft nach jedem Einschiebevorgang des dreidimensional konvexen Körpers 9 insbesondere durch Beaufschlagen des Stößel 8 mit einer definierten Gegenkraft in Richtung der Druckfeder 11 erfasst wird. Vorteilhafterweise wird die Gegenkraft derart gewählt, dass sie der gewünschten Vorspannkraft entspricht. Lässt sich der Stößel 8 dann durch die Gegenkraft nicht mehr axial in den Anker 3 hinein verlagern, ist die gewünschte Vorspannkraft erreicht. Anschließend wird der Anker 3 mitsamt dreidimensional konvexen Körper 9, Druckfeder 11 und Stößel 8 als Vormontagegruppe verbaut. Das Magnetventil 1 erlaubt es somit auf einfache Art und Weise die Vorspannkraft der Druckfeder 11 genau einzustellen und damit gegebene Teiletoleranzen zu kompensieren.

## Patentansprüche

1. Magnetventil (1), insbesondere zur Steuerung eines Bremsdrucks einer Radbremse eines Kraftfahrzeugs, mit einem axial verschiebbar gelagerten Anker (3),
wobei ein Ende des Ankers (3) einem Polkern (2) zugeordnet ist und
an einem anderen Ende des Ankers (3) ein Ventildichtelement angeordnet ist, wobei der Anker (3) einen Axialdurchgang (4) aufweist,
wobei ein Verschlusselement in wählbarer Position kraft- und/oder formschlüssig in dem Axialdurchgang (4) gehalten wird,
und in dem Axialdurchgang (4) ein Stößel (8) axial verschiebbar gelagert ist, der in Einbaulage eine Verbindung mit dem Polkern (2) darstellt,
wobei in dem Axialdurchgang (4) eine Druckfeder (11) positioniert ist,
wobei die Druckfeder (11) zwischen dem Stößel (8) und dem Verschlusselement vorgespannte gehalten wird,
**dadurch gekennzeichnet, dass**
das Verschlusselement als dreidimensional konvexer Körper (9) ausgebildet ist.

2. Magnetventil (1) nach Anspruch 1, **dadurch gekennzeichnet, dass** der dreidimensional konvexe Körper (9) runde Formen aufweist.

3. Magnetventil (1) nach einem der vorhergehenden Ansprüche, **dadurch gekennzeichnet, dass** der dreidimensional konvexe Körper (9) in den Axialdurchgang (4) eingepresst ist.

4. Magnetventil (1) nach Anspruch 3, **dadurch gekennzeichnet, dass** der dreidimensional konvexe Körper (9) vollumfänglich an dem Axialdurchgang (4) anliegt.

5. Magnetventil (1) nach einem der vorhergehenden Ansprüche, **dadurch gekennzeichnet, dass** der dreidimensional konvexe Körper (9) einen ovaler Längsschnitt aufweist, insbesondere dass der dreidimensional konvexe Körper (9) als ein Ovoid ausgebildet ist.

6. Magnetventil (1) nach einem der vorhergehenden Ansprüche, **dadurch gekennzeichnet, dass** der dreidimensional konvexe Körper (9) als ein Ellipsoid ausgebildet ist, insbesondere als ein Rotationsellipsoid ausgebildet ist.

7. Magnetventil (1) nach einem der vorhergehenden Ansprüche, **dadurch gekennzeichnet, dass** der dreidimensional konvexe Körper (9) als Kugel ausgebildet ist.

8. Magnetventil (1) nach einem der vorhergehenden Ansprüche, **dadurch gekennzeichnet, dass** der Anker (3) an seiner Mantelaußenfläche mindestens eine Längsnut (13) aufweisen.

9. Magnetventil (1) nach einem der vorhergehenden Ansprüche, **dadurch gekennzeichnet, dass** eine Hülse (5) im Axialdurchgang (4) des Ankers (3) angeordnet ist zur Fixierung und/oder zur Führung des Stößels (8).

10. Magnetventil (1) nach einem der vorhergehenden Ansprüche, **dadurch gekennzeichnet, dass** der dreidimensional konvexe Körper (9) das Verschlusselement und das Ventildichtelement ausbildet,

11. Anker (3) für ein Magnetventil (1), insbesondere zur Steuerung eines Bremsdrucks einer Radbremse eines Kraftfahrzeugs, wobei der Anker (3) axial verschiebbar im Magnetventil (1) lagerbar ist, wobei ein Ende des Ankers (3) einem Polkern (2) zugeordnet ist und an einem anderen Ende des Ankers (3) ein Ventildichtelement angeordnet ist, wobei der Anker (3) einen Axialdurchgang (4) aufweist, wobei ein Verschlusselement in wählbarer Position kraft- und/oder formschlüssig in dem Axialdurchgang (4) gehalten wird, und in dem Axialdurchgang (4) ein Stößel (8) axial verschiebbar gelagert ist, der in Einbaulage eine Verbindung mit dem Polkern (2) darstellt, wobei in dem Axialdurchgang (4) eine Druckfeder (11) positioniert ist, wobei die Druckfeder (11) zwischen dem Stößel (8) und dem Verschlusselement vorgespannte gehalten wird, **dadurch gekennzeichnet, dass** das Verschlusselement als dreidimensional konvexer Körper (9) ausgebildet ist.

12. Verfahren zur Herstellung eines Ankers (3) für ein Magnetventil (1) nach einem oder mehreren der vorhergehenden Ansprüche, **dadurch gekennzeichnet, dass** zuerst eine Hülse (5) und anschließend der Stößel (8) und anschließend die Druckfeder (11) in den Axialdurchgang (4) eingebracht werden, und das Verschlusselement derart weit in den Axialdurchgang (4) eingebracht wird, bis die zwischen dem Verschlusselement und dem Stößel (8) verspannte Druckfeder (11) eine gewünschte Vorspannkraft erreicht, wobei die Vorspannkraft der Druckfeder (11) durch Beaufschlagen des Stößels (8) mit einer bestimmten Gegenkraft ermittelt wird.

## Claims

1. Solenoid valve (1), in particular for controlling a brake pressure of a wheel brake of a motor vehicle, comprising an axially moveably mounted armature (3), wherein one end of the armature (3) is assigned to a pole core (2) and
a valve sealing element is arranged at another end of the armature (3),
wherein the armature (3) has an axial passage (4), wherein a closure element is retained in a selectable position in the axial passage (4) by force fit and/or form fit,
and a plunger (8) is axially moveably mounted in the axial passage (4) and provides a connection to the pole core (2) in an installation position,
wherein a compression spring (11) is positioned in the axial passage (4),
wherein the compression spring (11) is held under preload between the plunger (8) and the closure element,
**characterized in that**
the closure element is designed as a three-dimensionally convex body (9).

2. Solenoid valve (1) according to Claim 1, **characterized in that** the three-dimensionally convex body (9) has round forms.

3. Solenoid valve (1) according to either of the preceding claims, **characterized in that** the three-dimensionally convex body (9) is pressed into the axial passage (4).

4. Solenoid valve (1) according to Claim 3, **characterized in that** the three-dimensionally convex body (9) bears against the axial passage (4) around the entire periphery.

5. Solenoid valve (1) according to any of the preceding claims, **characterized in that** the three-dimensionally convex body (9) has an oval longitudinal section, in particular **in that** the three-dimensionally convex body (9) is configured as an ovoid.

6. Solenoid valve (1) according to any of the preceding claims, **characterized in that** the three-dimensionally convex body (9) is configured as an ellipsoid, in particular as a rotational ellipsoid.

7. Solenoid valve (1) according to any of the preceding claims, **characterized in that** the three-dimensionally convex body (9) is configured as a ball.

8. Solenoid valve (1) according to any of the preceding claims, **characterized in that** the armature (3) has at least one longitudinal groove (13) on its outer casing surface.

9. Solenoid valve (1) according to any of the preceding claims, **characterized in that** a sleeve (5) is arranged in the axial passage (4) of the armature (3) for fixing and/or guiding the plunger (8).

10. Solenoid valve (1) according to any of the preceding claims, **characterized in that** the three-dimensionally convex body (9) forms the closure element and the valve sealing element.

11. Armature (3) for a solenoid valve (1), in particular for controlling a brake pressure of a wheel brake of a motor vehicle, wherein the armature (3) is axially moveably mounted in the solenoid valve (1), wherein one end of the armature (3) is assigned to a pole core (2) and a valve sealing element is arranged at another end of the armature (3), wherein the armature (3) has an axial passage (4), wherein a closure element is retained in a selectable position in the axial passage (4) by force fit and/or form fit, and a plunger (8) is axially moveably mounted in the axial passage (4) and provides a connection to the pole core (2) in an installation position, wherein a compression spring (11) is positioned in the axial passage (4), wherein the compression spring (11) is held under preload between the plunger (8) and the closure element, **characterized in that** the closure element is designed as a three-dimensionally convex body (9).

12. Method for producing an armature (3) for a solenoid valve (1) according to one or more of the preceding claims, **characterized in that** firstly a sleeve (5) and then the plunger (8) and then the compression spring (11) are introduced into the axial passage (4), and the closure element is inserted into the axial passage (4) so far until the compression spring (11), preloaded between the closure element and the plunger (8), reaches a desired preload force, wherein the preload force of the compression spring (11) is determined by applying a specific counter-force to the plunger (8).

## Revendications

1. Électrovanne (1), en particulier servant à la commande d'une pression de freinage d'un frein de roue d'un véhicule automobile, comprenant une armature (3) montée de manière axialement mobile,
dans laquelle une extrémité de l'armature (3) est associée à un noyau polaire (2) et
un élément d'étanchéité de soupape est disposé à une autre extrémité de l'armature (3),
dans laquelle l'armature (3) comprend un passage axial (4),
dans laquelle un élément de fermeture est retenu dans le passage axial (4) par force et/ou par complémentarité de forme dans une position pouvant être sélectionnée,
et un poussoir (8) est monté de manière axialement mobile dans le passage axial (4), lequel poussoir constitue une liaison au noyau polaire (2) dans la position d'installation,
dans laquelle un ressort de compression (11) est positionné dans le passage axial (4),
dans lequel le ressort de compression (11) est retenu de manière précontrainte entre le poussoir (8) et l'élément de fermeture,
**caractérisée en ce que**
l'élément de fermeture est réalisé sous forme de corps (9) convexe de manière tridimensionnelle.

2. Électrovanne (1) selon la revendication 1, **caractérisée en ce que** le corps (9) convexe de manière tridimensionnelle présente des formes rondes.

3. Électrovanne (1) selon l'une des revendications précédentes, **caractérisée en ce que** le corps (9) convexe de manière tridimensionnelle est enfoncé dans le passage axial (4).

4. Électrovanne (1) selon la revendication 3, **caractérisée en ce que** le corps (9) convexe de manière tridimensionnelle s'appuie contre le passage axial (4) sur toute la périphérie.

5. Électrovanne (1) selon l'une des revendications précédentes, **caractérisée en ce que** le corps (9) convexe de manière tridimensionnelle présente une section longitudinale ovale, en particulier **en ce que** le corps (9) convexe de manière tridimensionnelle est réalisé sous la forme d'un ovoïde.

6. Électrovanne (1) selon l'une des revendications précédentes, **caractérisée en ce que** le corps (9) convexe de manière tridimensionnelle est réalisé sous la forme d'un ellipsoïde, en particulier sous la forme d'un ellipsoïde de révolution.

7. Électrovanne (1) selon l'une des revendications précédentes, **caractérisée en ce que** le corps (9) convexe de manière tridimensionnelle est réalisé sous forme de sphère.

8. Électrovanne (1) selon l'une des revendications précédentes, **caractérisée en ce que** l'armature (3) comprend au moins une rainure longitudinale (13) sur sa surface d'enveloppe extérieure.

9. Électrovanne (1) selon l'une des revendications précédentes, **caractérisée en ce qu'**une douille (5) est disposée dans le passage axial (4) de l'armature (3) pour la fixation et/ou pour le guidage du poussoir (8).

10. Électrovanne (1) selon l'une des revendications précédentes, **caractérisée en ce que** le corps (9) convexe de manière tridimensionnelle forme l'élément de fermeture et l'élément d'étanchéité de soupape.

11. Armature (3) pour une électrovanne (1), en particulier servant à la commande d'une pression de freinage d'un frein de roue d'un véhicule automobile, dans laquelle l'armature (3) peut être montée de manière axialement mobile dans l'électrovanne (1), dans laquelle une extrémité de l'armature (3) est associée à un noyau polaire (2) et un élément d'étanchéité de soupape est disposé à une autre extrémité de l'armature (3), dans laquelle l'armature (3) comprend un passage axial (4), dans laquelle un élément de fermeture est retenu dans le passage axial (4) par force et/ou par complémentarité de forme dans une position pouvant être sélectionnée, et un poussoir (8) est monté de manière axialement mobile dans le passage axial (4), lequel poussoir constitue une liaison au noyau polaire (2) dans la position d'installation, dans laquelle un ressort de compression (11) est positionné dans le passage axial (4), dans lequel le ressort de compression (11) est retenu de manière précontrainte entre le poussoir (8) et l'élément de fermeture, **caractérisée en ce que** l'élément de fermeture est réalisé sous forme de corps (9) convexe de manière tridimensionnelle.

12. Procédé de fabrication d'une armature (3) pour une électrovanne (1) selon l'une ou plusieurs des revendications précédentes, **caractérisé en ce que** tout d'abord une douille (5) et ensuite le poussoir (8) puis le ressort de compression (11) sont introduits dans le passage axial (4), et l'élément de fermeture est introduit dans le passage axial (4) jusqu'à ce que le ressort de compression (11) serré entre l'élément de fermeture et le poussoir (8) atteigne une force de précontrainte souhaitée, dans lequel la force de précontrainte du ressort de compression (11) est déterminée en soumettant le poussoir (8) à une force antagoniste déterminée.
